# EUROPEAN PATENT SPECIFICATION

(11) **EP 4 552 863 B1**
(45) Date of publication and mention of the grant of the patent: **05.08.2026**
(21) Application number: 24206313.9
(22) Date of filing: 14.10.2024
(51) Int. Cl.: B60C 11/12, B60C 11/03

(54) **TIRE**
REIFEN
PNEUMATIQUE

(30) Priority: 08.11.2023 JP 2023191065
(43) Date of publication of application: 14.05.2025
(73) Proprietor: Sumitomo Rubber Industries, Ltd., Kobe-shi, Hyogo 651-0072 (JP)
(72) Inventor: KITAHARA, Ryotaro, Kobe-shi, 651-0072 (JP); NINOMIYA, Hiroaki, Kobe-shi, 651-0072 (JP); NOBUKUNI, Shingo, Kobe-shi,, 651-0072 (JP)
(74) Representative: Manitz Finsterwald Patent- und Rechtsanwaltspartnerschaft mbB

(56) References cited:
- WO-A1-2023/074025
- WO-A1-2023/074026
- JP-A- 2012 121 542
- JP-A- 2023 066 314
- US-A1- 2011 162 770
- US-A1- 2014 360 639
- US-B2- 11 267 291

## Description

### BACKGROUND OF THE INVENTION

### Field of the Invention

The present invention relates to a tire.

### Background Art

Japanese Laid-Open Patent Publication No. 2019-194051 describes a tire provided with inner shoulder sipes on an inner shoulder land portion. The inner shoulder sipes include second end sipes each extending inward in the tire axial direction from one end thereof, and third end sipes each extending outward in the tire axial direction from one end thereof. A region where no sipe is provided is provided between the one ends of the second end sipes and the one ends of the third end sipes in the tire circumferential direction.

In the tire of Japanese Laid-Open Patent Publication No. 2019-194051, the region between the second end sipes and the third end sipes increases the stiffness of the inner shoulder land portion, thereby improving steering stability. However, it has been found that such a tire leads to a new problem of deteriorating noise performance during running. Related technologies are also known from JP 2012 121542 A, US 2011/162770 A1, JP 2023 066314 A, WO 2023/074025 A1, WO 2023/074026 A1, US 11 267 291 B2, and US 2014/360639 A1.

The present invention has been made in view of the above-described problem, and a main object of the present invention is to provide a tire capable of improving noise performance while maintaining steering stability.

### SUMMARY OF THE INVENTION

The present invention set out in the appended claims. A tire includes a tread portion, wherein: the tread portion includes a first tread end and a first shoulder land portion including the first tread end; a plurality of sipe groups each including four sipes extending in a tire axial direction are arranged in a tire circumferential direction on the first shoulder land portion; in each of the sipe groups, the four sipes include a first sipe, a second sipe adjacent to an outer side in the tire axial direction of the first sipe via a first land portion where no groove and no sipe are provided between the first sipe and the second sipe, a third sipe adjacent to the first sipe in the tire circumferential direction, and a fourth sipe adjacent to the outer side in the tire axial direction of the third sipe via a second land portion where no groove and no sipe are provided between the third sipe and the fourth sipe; and a center in the tire axial direction of the second land portion is located at a position different in the tire axial direction from a center in the tire axial direction of the first land portion.

As a result of adopting the above configuration, the tire of the present invention is capable of improving noise performance while maintaining steering stability.

### BRIEF DESCRIPTION OF THE DRAWINGS

FIG. 1 is an enlarged plan view of a tread portion of one embodiment of the present invention;
FIG. 2 is a plan view of the tread portion;
FIGS. 3(A) and 3(B) are plan views for describing a virtual extension line;
FIG. 4 is a plan view of a first shoulder land portion;
FIG. 5 is a plan view of a second shoulder land portion;
FIG. 6 is a plan view of a first middle land portion and a second middle land portion; and
FIG. 7 is a plan view of a crown land portion.

### DETAILED DESCRIPTION

Hereinafter, an embodiment of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

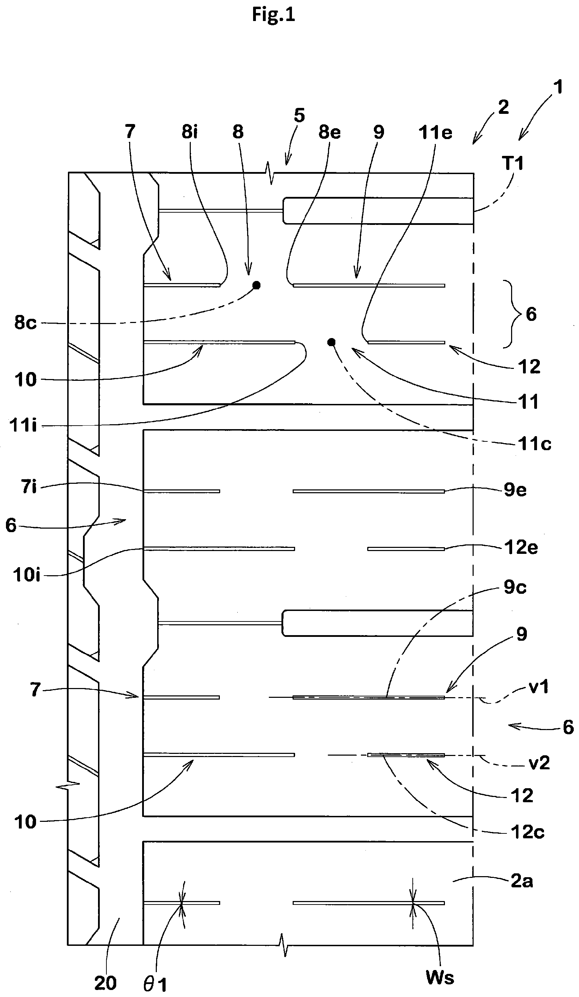

FIG. 1 is an enlarged plan view of a tread portion 2 of a tire 1 showing one embodiment of the present invention. The present invention is suitably used for a pneumatic tire for a passenger car such as an SUV (Sport Utility Vehicle). However, the present invention may be used for pneumatic tires for a light truck and for a heavy duty vehicle and a non-pneumatic tire the interior of which is not filled with pressurized air.

In the present specification, unless otherwise specified, dimensions and the like of components of the tire 1 are values measured in a standardized state. In the case of a pneumatic tire, the "standardized state" is a state where the tire 1 is fitted on a standardized rim (not shown) and inflated to a standardized internal pressure and no load is applied to the tire 1. In the case of a non-pneumatic tire or a tire for which various standards are not defined, the standardized state means a standard use state, corresponding to the purpose of use of the tire, where the tire is not mounted on a vehicle and no load is applied to the tire.

The "standardized rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tread portion 2 includes a first tread end T1 and a first shoulder land portion 5 including the first tread end T1. On the first shoulder land portion 5, a plurality of sipe groups 6 each including four sipes extending in the tire axial direction are arranged in the tire circumferential direction. In the present specification, the "sipe" is a slit-like recess having a width Ws of less than 1.5 mm, and is clearly distinguished from grooves that are recesses having a groove width of 1.5 mm or more. The grooves include circumferential grooves and lateral grooves described later, etc. The sipes and the grooves are recesses provided on a tread surface 2a of the tread portion 2. The tread surface 2a is a surface that is in contact with a flat surface in a standardized load-applied state.

The standardized load-applied state is a state where a standardized load is applied to the tire 1 in the standardized state and the tire 1 is brought into contact with the flat surface at a camber angle of 0°. The "standardized load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

In each of the sipe groups 6, the four sipes include a first sipe 7, and a second sipe 9 adjacent to the outer side in the tire axial direction of the first sipe 7 via a first land portion 8 where no groove and no sipe are provided between the first sipe 7 and the second sipe 9. The four sipes also include a third sipe 10 adjacent to the first sipe 7 in the tire circumferential direction, and a fourth sipe 12 adjacent to the outer side in the tire axial direction of the third sipe 10 via a second land portion 11 where no groove and no sipe are provided between the third sipe 10 and the fourth sipe 12. Such first land portion 8 and second land portion 11 can suppress a decrease in the pattern stiffness of the first shoulder land portion 5, and further can maintain high steering stability.

A center 11c in the tire axial direction of the second land portion 11 is located at a position different in the tire axial direction from a center 8c in the tire axial direction of the first land portion 8. The first land portion 8 and the second land portion 11 are each a land portion having high stiffness, and thus have an effect of suppressing vibration of the first shoulder land portion 5 upon release from ground contact at an early stage. Since the center 11c of the second land portion 11 is provided at a position different from the center 8c of the first land portion 8, the above vibration suppressing effect is exhibited over a wide range in the tire axial direction of the first shoulder land portion 5, so that noise performance during running can be improved. The first land portion 8 and the second land portion 11 also reduce pitch sound caused by contact between the sipes and a road surface. Since the center 11c of the second land portion 11 is located at a position different from the center 8c of the first land portion 8, the locations where pitch sound is generated by the respective sipes 7, 9, 10, and 12 are distributed, so that noise performance can be further improved.

In order to further effectively exhibit the above-described effects, it is preferable that the center 11c of the second land portion 11 is located at a position different in the tire axial direction from the first land portion 8. In other words, it is preferable that the center 11c of the second land portion 11 does not overlap the first land portion 8 in the tire axial direction over the entire length of the first land portion 8. In the present embodiment, as shown in FIG. 1, the second land portion 11 does not overlap the first land portion 8 in the tire axial direction over the entire length of the first land portion 8. Accordingly, the above-described effects are further effectively exhibited. The "second land portion 11 does not overlap the first land portion 8 in the tire axial direction over the entire length of the first land portion 8" means that an outer end 8e in the tire axial direction of the first land portion 8 is located at the same position in the tire axial direction as an inner end 11i in the tire axial direction of the second land portion 11 or is located inward of the inner end 11i in the tire axial direction. The "second land portion 11 does not overlap the first land portion 8 in the tire axial direction over the entire length of the first land portion 8" also means that an inner end 8i in the tire axial direction of the first land portion 8 is located at the same position in the tire axial direction as an outer end 11e in the tire axial direction of the second land portion 11 or is located outward of the outer end 11e in the tire axial direction.

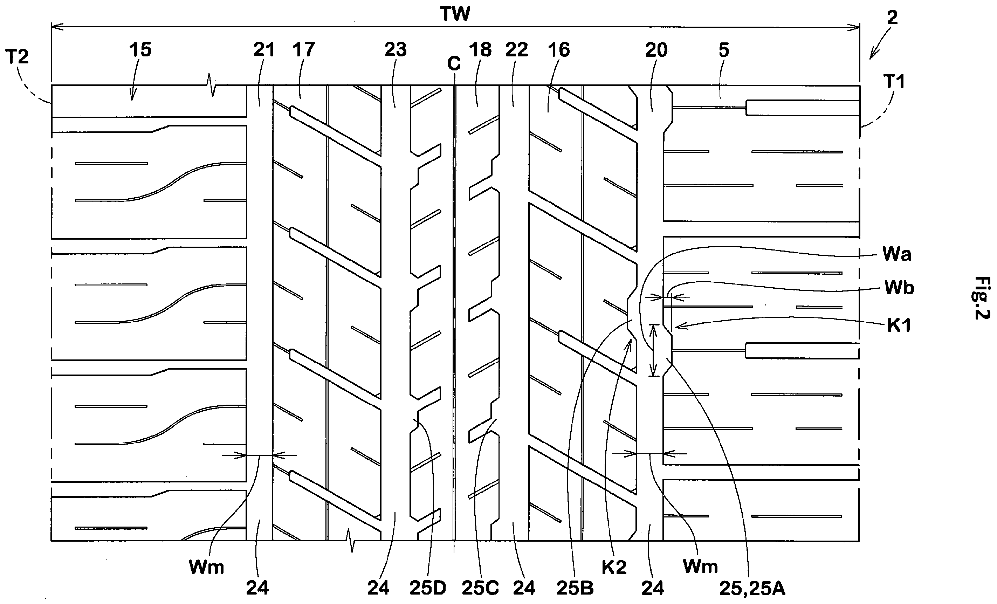

FIG. 2 is a plan view of the tread portion 2. As shown in FIG. 2, the tread portion 2 of the present embodiment includes a second tread end T2, a second shoulder land portion 15, a first middle land portion 16, a second middle land portion 17, and a crown land portion 18. The tread portion 2 also includes, for example, a first shoulder circumferential groove 20, a second shoulder circumferential groove 21, a first crown circumferential groove 22, and a second crown circumferential groove 23.

In the case of a pneumatic tire, the first tread end T1 and the second tread end T2 are each at a position at which the tire 1 in the standardized load-applied state is in contact with the flat surface on the outermost side in the tire axial direction. The length in the tire axial direction between the first tread end T1 and the second tread end T2 is a tread width TW.

The second shoulder land portion 15 of the present embodiment includes the second tread end T2. The first middle land portion 16 is, for example, adjacent to the first shoulder land portion 5 in the tire axial direction. The second middle land portion 17 of the present embodiment is adjacent to the second shoulder land portion 15 in the tire axial direction. The crown land portion 18 is, for example, located between the first middle land portion 16 and the second middle land portion 17 and includes a tire equator C.

The first shoulder circumferential groove 20 demarcates the first shoulder land portion 5 and the first middle land portion 16. The second shoulder circumferential groove 21 demarcates the second shoulder land portion 15 and the second middle land portion 17. The first crown circumferential groove 22 demarcates the first middle land portion 16 and the crown land portion 18. The second crown circumferential groove 23 demarcates the second middle land portion 17 and the crown land portion 18.

The respective circumferential grooves 20 to 23 extend in the tire circumferential direction. The first shoulder circumferential groove 20, the first crown circumferential groove 22, and the second crown circumferential groove 23 of the present embodiment each include a main portion 24 extending continuously parallel to the tire circumferential direction, and projection portions 25 each projecting from the main portion 24 toward a land portion side. Such projection portions 25 disturb and reduce air column resonance in the circumferential groove. The second shoulder circumferential groove 21 is formed, for example, only with a main portion 24.

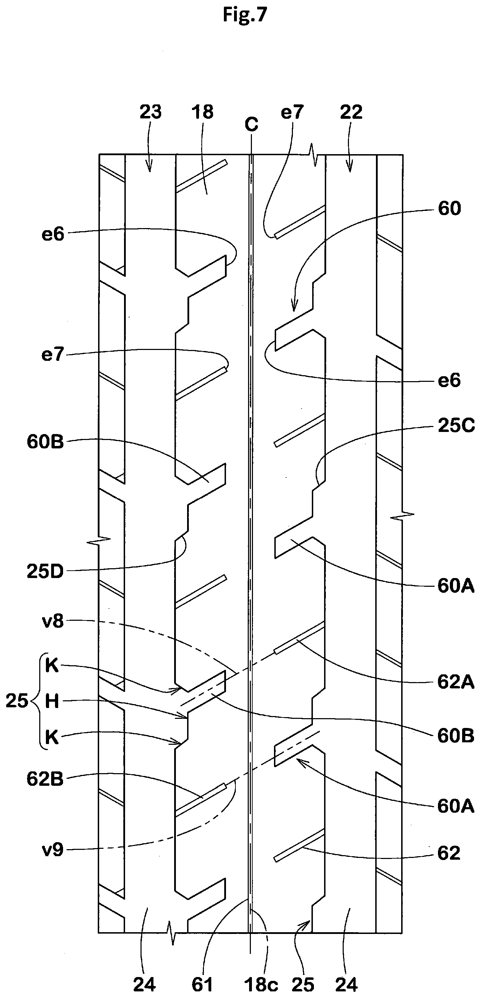

The length in the tire circumferential direction of each projection portion 25 decreases in a direction away from the main portion 24, for example. Such projection portions 25 can suppress a significant decrease in the stiffness (pattern stiffness) of each land portion. Each projection portion 25 is formed, for example, in a trapezoidal shape, more specifically, in an isosceles trapezoidal shape. In the present embodiment, the projection portion 25 includes a pair of inclined portions K, K whose projection lengths from the main portion 24 change continuously, and an equal-length portion H (shown in FIG. 7) which connects both inclined portions K and has a constant projection length.

The projection portions 25 of the present embodiment include first projection portions 25A, second projection portions 25B, third projection portions 25C, and fourth projection portions 25D. Each first projection portion 25A is provided, for example, so as to project from the main portion 24 of the first shoulder circumferential groove 20 toward the first tread end T1 side. Each second projection portion 25B is provided, for example, so as to project from the main portion 24 of the first shoulder circumferential groove 20 toward the tire equator C side. Each third projection portion 25C is provided, for example, so as to project from the main portion 24 of the first crown circumferential groove 22 toward the tire equator C side. Each fourth projection portion 25D is provided, for example, so as to project from the main portion 24 of the second crown circumferential groove 23 toward the tire equator C side.

Each first projection portion 25A and each second projection portion 25B overlap in the tire circumferential direction, for example. Accordingly, the effect of disturbing air column resonance is enhanced. In the present embodiment, an inclined portion K1 on one side in the tire circumferential direction of the first projection portion 25A and an inclined portion K2 on the other side in the tire circumferential direction of the second projection portion 25B overlap in the tire circumferential direction. In addition, each third projection portion 25C and each fourth projection portion 25D overlap in the tire circumferential direction, for example.

Although not particularly limited, the ratio (Wb/Wa) between a maximum length Wa in the tire circumferential direction and a maximum length (projection length) Wb in the tire axial direction of the projection portion 25 is preferably not less than 0.10 and further preferably not less than 0.15, and is preferably not greater than 0.30 and further preferably not greater than 0.35.

A groove width Wm of each of the circumferential grooves 20 to 23 is preferably not less than 2.0% and further preferably not less than 2.5% of the tread width TW, and is preferably not greater than 5.0% and further preferably not greater than 4.5% of the tread width TW. The groove depth (not shown) of each of the circumferential grooves 20 to 23 is preferably not less than 6.0 mm and further preferably not less than 6.5 mm, and is preferably not greater than 8.5 mm and further preferably not greater than 8.0 mm. The groove width Wm of each of the circumferential grooves 20 to 23 is specified as the width of the main portion 24.

The tread portion 2 of the present embodiment also has a designated mounting direction to a vehicle. In the present embodiment, the first tread end T1 is an inner tread end located on the inner side of the vehicle when the tire 1 is mounted to the vehicle. The second tread end T2 is an outer tread end located on the outer side of the vehicle when the tire 1 is mounted to the vehicle. The tread portion 2 is not limited to such a mode.

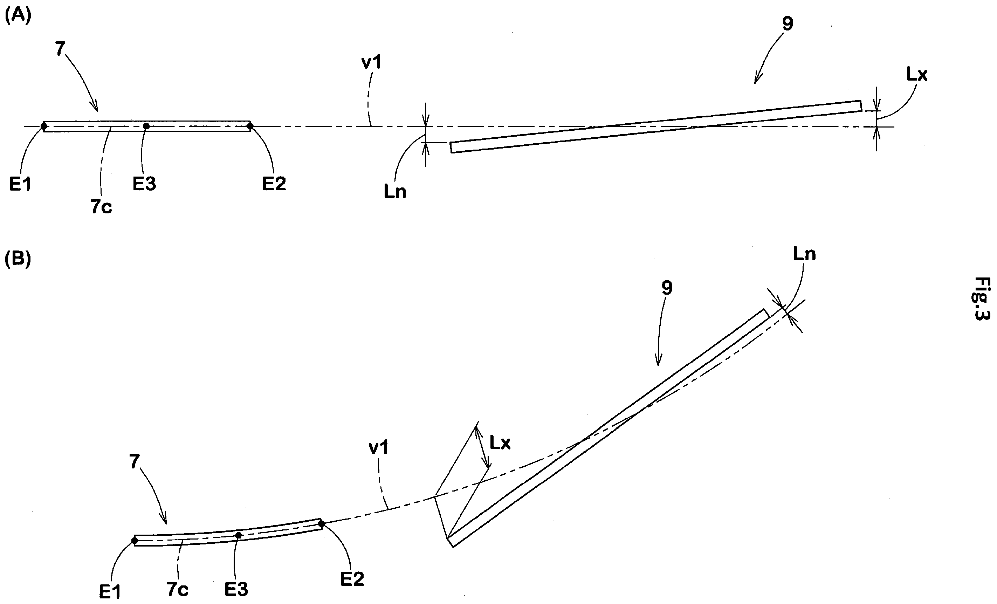

As shown in FIG. 1, the second sipe 9 is located on a virtual extension line v1 obtained by extending the first sipe 7 outward in the tire axial direction. Such first sipe 7 and second sipe 9 act to maintain high edge effects of the respective sipes 7 and 9 while appropriately decreasing the stiffness of the first shoulder land portion 5. The "located on the virtual extension line v1" not only means that a maximum value Lx of a shortest separation distance Ln between the virtual extension line v1 and the second sipe 9 is 0 mm, but also includes the case where the maximum value Lx of the shortest separation distance Ln is 2 mm or less (shown in FIGS. 3(A) and 3(B)). FIG. 3(A) shows a mode in which the first sipe 7 extends straight, and FIG. 3(B) shows a mode in which the first sipe 7 extends in an arc. As shown in FIGS. 3(A) and 3(B), the "virtual extension line v1" is specified as an arc passing through three points E1 to E3 on a width center line 7c of the first sipe 7 and having a single radius of curvature (including a straight line whose radius of curvature is ∞). The three points E1 to E3 are the inner end, the outer end, and the center in the tire axial direction of the width center line 7c. In the present embodiment, a width center line 9c of the second sipe 9 overlaps the virtual extension line v1 over the entire length thereof.

The fourth sipe 12 is located on a virtual extension line v2 obtained by extending the third sipe 10 outward in the tire axial direction. Accordingly, the above-described effects are more effectively exhibited. The "located on the virtual extension line v2" is defined in the same manner as the "located on the virtual extension line v1". In the present embodiment, a width center line 12c of the fourth sipe 12 overlaps the virtual extension line v2 over the entire length thereof.

An outer end 9e in the tire axial direction of the second sipe 9 and an outer end 12e in the tire axial direction of the fourth sipe 12 are located, for example, inward of the first tread end T1 in the tire axial direction. Accordingly, a decrease in the stiffness around the first tread end T1 is suppressed, so that steering stability is enhanced.

An inner end 7i in the tire axial direction of the first sipe 7 and an inner end 10i in the tire axial direction of the third sipe 10 are connected to the first shoulder circumferential groove 20, for example. Such first sipe 7 and third sipe 10 have an effect of disturbing air column resonance in the first shoulder circumferential groove 20, so that noise performance is improved.

An angle θ1 of each of the four sipes with respect to the tire axial direction is preferably not greater than 10 degrees and further preferably not greater than 5 degrees. Such sipes 7, 9, 10, and 12 are easily misaligned with the outer edge of the ground-contact shape of the tread portion 2, which tends to be a lateral elliptical shape, and contribute to reduction of pitch sound. The angle θ1 of each of the sipes 7, 9, 10, and 12 is 0 degrees in the present embodiment.

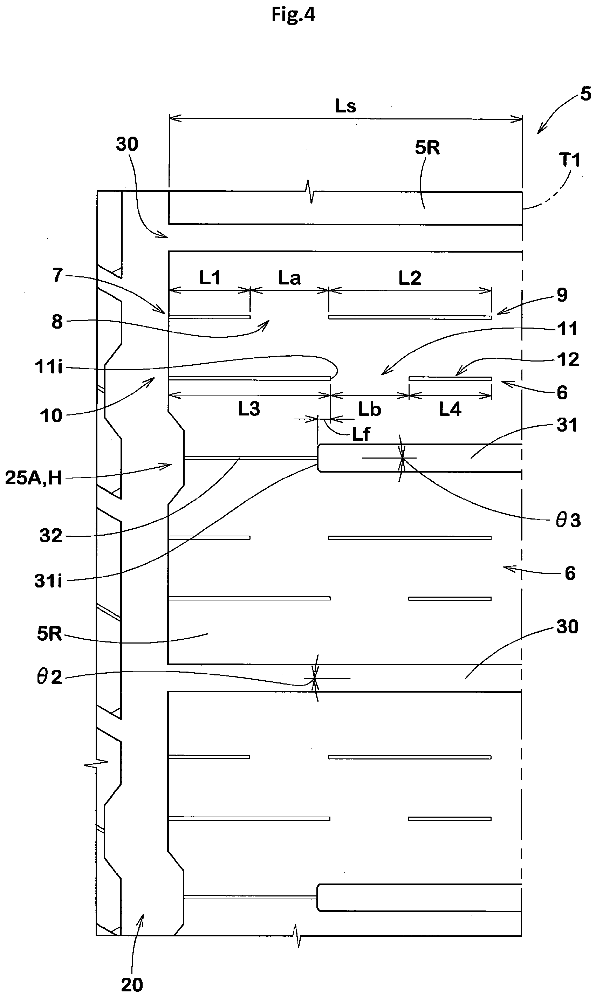

FIG. 4 is a plan view of the first shoulder land portion 5. As shown in FIG. 4, a length La of the first land portion 8 is not less than 20% and further preferably not less than 25% of a sum Σn1 of the length La of the first land portion 8, a length L1 of the first sipe 7, and a length L2 of the second sipe 9, and is not greater than 40% and further preferably not greater than 35% of the sum Σn1. Since the length La of the first land portion 8 is not less than 20% of the sum Σn1, an excessive decrease in the stiffness of the first shoulder land portion 5 can be suppressed. Since the length La of the first land portion 8 is not greater than 40% of the sum Σn1, the stiffness of the first shoulder land portion 5 can be appropriately decreased. Each of the lengths La, L1, and L2 is a length in the tire axial direction.

From the same viewpoint, a length Lb of the second land portion 11 is preferably not less than 20% and further preferably not less than 25% of a sum Σn2 of the length Lb of the second land portion 11, a length L3 of the third sipe 10, and a length L4 of the fourth sipe 12, and is preferably not greater than 40% and further preferably not greater than 35% of the sum Σn2. Each of the lengths Lb, L3, and L4 is a length in the tire axial direction.

The sum Σn1 is preferably not less than 50% and further preferably not less than 60% of a length Ls in the tire axial direction of the first shoulder land portion 5, and is preferably not greater than 90% and further preferably not greater than 80% of the length Ls. Since the sum Σn1 is not less than 50% of the length Ls of the first shoulder land portion 5, the stiffness of the first shoulder land portion 5 can be appropriately decreased, so that pitch sound can be reduced. Since the sum Σn1 is not greater than 90% of the length Ls of the first shoulder land portion 5, a significant decrease in the stiffness of the first shoulder land portion 5 can be suppressed and high steering stability can be maintained. From the same viewpoint, the sum Σn2 is preferably not less than 50% and further preferably not less than 60% of the length Ls of the first shoulder land portion 5, and is preferably not greater than 90% and further preferably not greater than 80% of the length Ls. In the present embodiment, the sum Σn1 and the sum Σn2 are the same length.

The first shoulder land portion 5 includes, for example, a first shoulder lateral groove 30, a second shoulder lateral groove 31, and a connection sipe 32. In the present embodiment, a plurality of first shoulder lateral grooves 30, a plurality of second shoulder lateral grooves 31, and a plurality of connection sipes 32 are provided. The first shoulder lateral grooves 30, the second shoulder lateral grooves 31, and the connection sipes 32 extend in the tire axial direction, for example. A plurality of sipe groups 6 are arranged between the first shoulder lateral grooves 30 of the present embodiment adjacent in the tire circumferential direction. The first shoulder lateral grooves 30 and the second shoulder lateral grooves 31 are provided alternately in the tire circumferential direction, for example.

The first shoulder lateral grooves 30 of the present embodiment traverse the first shoulder land portion 5. Accordingly, the first shoulder land portion 5 is divided into a plurality of first shoulder blocks 5R. On each first shoulder block 5R, a plurality of sipe groups 6 are provided, and, in the present embodiment, two sipe groups 6 are provided. On each first shoulder block 5R, the first sipes 7 are alternately arranged with, for example, the third sipes 10 in the tire circumferential direction.

An angle θ2 of each of the plurality of first shoulder lateral grooves 30 with respect to the tire axial direction is preferably not greater than 10 degrees and further preferably not greater than 5 degrees. Such first shoulder lateral grooves 30 are easily misaligned with the outer edge of the ground-contact shape of the tread portion 2, which tends to be a lateral elliptical shape, and contribute to reduction of pitch sound. The angle θ2 of each first shoulder lateral groove 30 is 0 degrees in the present embodiment.

The absolute value |θ1 - θ2| of the difference between the angle θ1 of each of the four sipes and the angle θ2 of each of the plurality of first shoulder lateral grooves 30 is preferably not greater than 10 degrees and further preferably not greater than 5 degrees. Accordingly, the stiffness of the land portion between the four sipes and the first shoulder lateral grooves 30 is equalized in the tire axial direction, so that high steering stability is maintained. In the present embodiment, the absolute value |θ1 - θ2| of the difference is 0 degrees.

Each second shoulder lateral groove 31 is located so as to interpose the sipe groups 6 between the first shoulder lateral grooves 30 and the second shoulder lateral groove 31. The second shoulder lateral groove 31 extends inward in the tire axial direction from the first tread end T1 and terminates in the first shoulder block 5R. Such a second shoulder lateral groove 31 serves to appropriately decrease the stiffness of the first shoulder land portion 5.

An inner end 31i in the tire axial direction of the second shoulder lateral groove 31 is preferably located inward, in the tire axial direction, of the inner end 11i in the tire axial direction of the second land portion 11 adjacent thereto in the tire circumferential direction. Accordingly, the second shoulder lateral groove 31 and the second land portion 11 overlap in the tire axial direction, so that the location where the stiffness of the first shoulder land portion 5 is excessively decreased is reduced in the tire axial direction. If the inner end 31i of the second shoulder lateral groove 31 is located excessively inward, in the tire axial direction, of the inner end 11i of the second land portion 11 adjacent thereto in the tire circumferential direction, the stiffness of the first shoulder land portion 5 is excessively decreased by the second shoulder lateral groove 31. If the inner end 31i of the second shoulder lateral groove 31 and the inner end 11i of the second land portion 11 adjacent thereto in the tire circumferential direction are excessively close to each other in the tire axial direction, the length of the second shoulder lateral groove 31 becomes excessively small. Therefore, a distance Lf in the tire axial direction between the inner end 31i of the second shoulder lateral groove 31 and the inner end 11i of the second land portion 11 adjacent thereto is preferably not less than 5% and further preferably not less than 10% of the length Lb of the second land portion 11, and is preferably not greater than 25% and further preferably not greater than 20% of the length Lb.

An angle θ3 of each of the plurality of second shoulder lateral grooves 31 with respect to the tire axial direction is preferably not greater than 10 degrees and further preferably not greater than 5 degrees. Such second shoulder lateral grooves 31 are also easily misaligned with the outer edge of the ground-contact shape of the tread portion 2, which tends to be a lateral elliptical shape, and contribute to reduction of pitch sound. The angle θ3 of each second shoulder lateral groove 31 is 0 degrees in the present embodiment.

Each second shoulder lateral groove 31 extends substantially parallel to the first shoulder lateral groove 30. Such a second shoulder lateral groove 31 equalizes the stiffness of the portion of the first shoulder land portion 5 surrounded by the first shoulder lateral groove 30 and the second shoulder lateral groove 31, over the tire axial direction, so that steering stability is enhanced. In the present specification, the "substantially parallel" means that the difference between one angle and the other angle is 0 degrees, and also includes the case where the absolute value of this difference is 5 degrees or less.

Each connection sipe 32 connects the inner end 31i of the second shoulder lateral groove 31 and the first shoulder circumferential groove 20. Such a connection sipe 32 exhibits an effect of disturbing air column resonance in the first shoulder circumferential groove 20. In the present embodiment, each connection sipe 32 is connected to the first projection portion 25A of the first shoulder circumferential groove 20, more specifically, to the center in the tire circumferential direction of the equal-length portion H. Accordingly, the above-described effects are effectively exhibited.

Each connection sipe 32 extends substantially parallel to the first shoulder lateral groove 30. Such a connection sipe 32 equalizes the stiffness of the portion of the first shoulder land portion 5 surrounded by the first shoulder lateral groove 30 and the connection sipe 32, over the tire axial direction, so that steering stability is enhanced.

The length Ls in the tire axial direction of such a first shoulder land portion 5 is preferably not less than 4.5% and further preferably not less than 5% of the tread width TW, and is preferably not greater than 40% and further preferably not greater than 30% of the tread width TW.

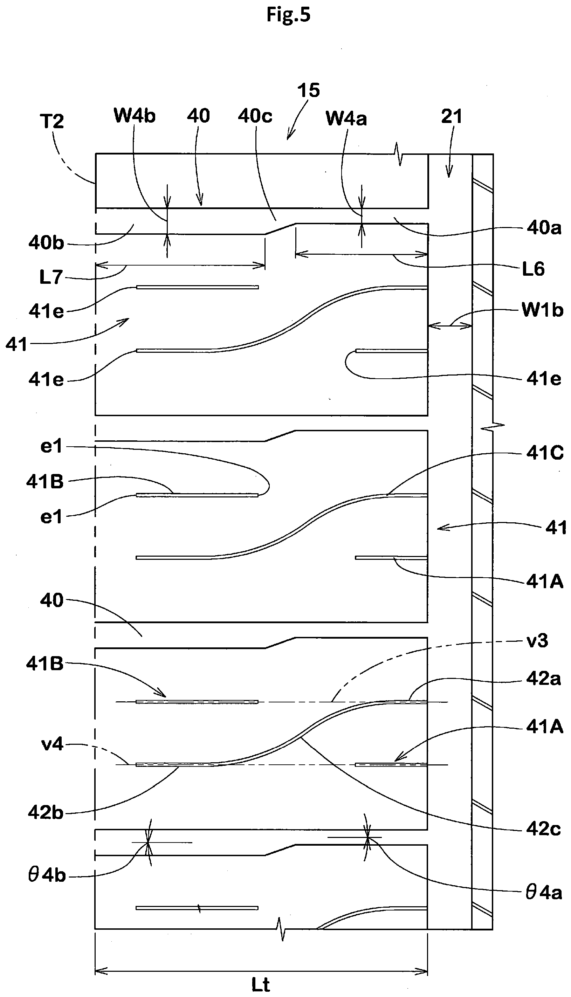

FIG. 5 is a plan view of the second shoulder land portion 15. In the present embodiment, the second shoulder land portion 15 is located on the outer side of the vehicle when the tire 1 is mounted to the vehicle. The second shoulder land portion 15 of the present embodiment includes a plurality of third shoulder lateral grooves 40 and a plurality of lateral sipes 41 each located between the third shoulder lateral grooves 40 adjacent in the tire circumferential direction.

The third shoulder lateral grooves 40 traverse the second shoulder land portion 15, for example. Each third shoulder lateral groove 40 of the present embodiment includes a first portion 40a, a second portion 40b, and a third portion 40c. The first portion 40a extends outward in the tire axial direction from the second shoulder circumferential groove 21 with a constant groove width. The second portion 40b is connected to the second tread end T2 with a larger groove width than the first portion 40a. The third portion 40c connects the first portion 40a and the second portion 40b and has a groove width increasing continuously toward the second portion 40b.

The first portion 40a and the second portion 40b extend substantially parallel to the first shoulder lateral groove 30. Such first portion 40a and second portion 40b are easily misaligned with the outer edge of the ground-contact shape of the tread portion 2, which tends to be a lateral elliptical shape, and contribute to reduction of pitch sound. The first portion 40a and the second portion 40b extend substantially parallel to the tire axial direction. An angle θ4a of the first portion 40a with respect to the tire axial direction and an angle θ4b of the second portion 40b with respect to the tire axial direction are 0 degrees in the present embodiment.

A groove width W4a of the first portion 40a is preferably not less than 60% and further preferably not less than 65% of a groove width W4b of the second portion 40b, and is preferably not greater than 90% and further preferably not greater than 85% of the groove width W4b. The groove width W4a of the first portion 40a is preferably not less than 25% and further preferably not less than 30% of a groove width W1b of the second shoulder circumferential groove 21, and is preferably not greater than 45% and further preferably not greater than 40% of the groove width W1b. The sipe width Ws (shown in FIG. 1) is preferably not less than 0.1 times and further preferably not less than 0.3 times the groove width W4a of the first portion 40a, and is preferably not greater than 0.6 times and further preferably not greater than 0.5 times the groove width W4a.

Although not particularly limited, a length L6 in the tire axial direction of the first portion 40a is preferably not less than 70% and further preferably not less than 75% of a length L7 in the tire axial direction of the second portion 40b, and is preferably not greater than 90% and further preferably not greater than 85% of the length L7. The length L6 of the first portion 40a is preferably not less than 30% and further preferably not less than 35% of a length Lt in the tire axial direction of the second shoulder land portion 15, and is preferably not greater than 50% and further preferably not greater than 45% of the length Lt.

Each lateral sipe 41 has, for example, at least an outer end 41e in the tire axial direction terminating in the second shoulder land portion 15. In the present embodiment, the lateral sipes 41 include first lateral sipes 41A, second lateral sipes 41B, and third lateral sipes 41C. Each first lateral sipe 41A is connected to the second shoulder circumferential groove 21. Each second lateral sipe 41B does not overlap the first lateral sipe 41A in the tire circumferential direction and the tire axial direction. Each third lateral sipe 41C is connected to the second shoulder circumferential groove 21 at a position different from the first lateral sipe 41A.

The first lateral sipes 41A extend straight, for example. The first lateral sipes 41A of the present embodiment extend substantially parallel to the tire axial direction.

Each second lateral sipe 41B has, for example, ends e1, e1 located in the second shoulder land portion 15. Each second lateral sipe 41B of the present embodiment is formed with a larger length in the tire axial direction than the first lateral sipe 41A. In the present embodiment, the second lateral sipes 41B extend substantially parallel to the tire axial direction.

Each third lateral sipe 41C includes, for example, an inner third sipe portion 42a, an outer third sipe portion 42b, and an intermediate third sipe portion 42c. The inner third sipe portion 42a of the present embodiment extends substantially parallel to the tire axial direction from the second shoulder circumferential groove 21. The inner third sipe portion 42a is located, for example, on a virtual extension line v3 obtained by extending the second lateral sipe 41B inward in the tire axial direction. In the present embodiment, the outer third sipe portion 42b extends substantially parallel to the tire axial direction. The outer third sipe portion 42b is located, for example, on a virtual extension line v4 obtained by extending the first lateral sipe 41A outward in the tire axial direction. The intermediate third sipe portion 42c of the present embodiment connects the inner third sipe portion 42a and the outer third sipe portion 42b and extends so as to be inclined to one side with respect to the tire axial direction. The "located on the virtual extension line v3" and the "located on the virtual extension line v4" are defined in the same manner as the "located on the virtual extension line v1".

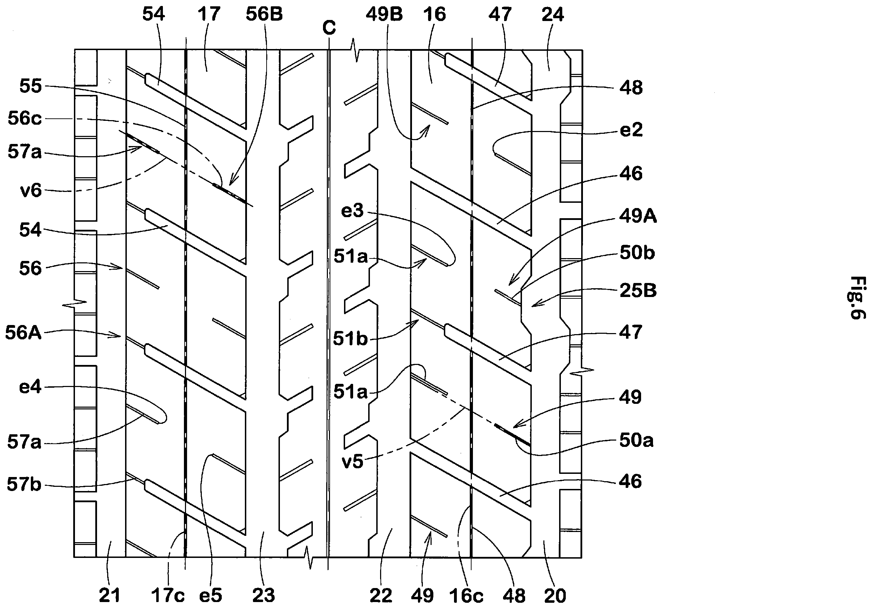

FIG. 6 is a plan view of the first middle land portion 16 and the second middle land portion 17. As shown in FIG. 6, the first middle land portion 16 of the present embodiment includes first middle lateral grooves 46, second middle lateral grooves 47, first middle circumferential sipes 48, and first middle lateral sipes 49.

In the present embodiment, the first middle lateral grooves 46 traverse the first middle land portion 16. The first middle lateral grooves 46 extend straight, for example. The first middle lateral grooves 46 of the present embodiment are inclined with respect to the tire axial direction.

The second middle lateral grooves 47 extend from the first shoulder circumferential groove 20 toward the tire equator C side and terminate in the first middle land portion 16, for example. The second middle lateral grooves 47 of the present embodiment extend straight. In the present embodiment, the second middle lateral grooves 47 are inclined with respect to the tire axial direction. The second middle lateral grooves 47 are inclined, for example, in the same direction as the first middle lateral grooves 46. In the present embodiment, the second middle lateral grooves 47 extend substantially parallel to the first middle lateral grooves 46.

The first middle circumferential sipes 48 of the present embodiment extend straight. The first middle circumferential sipes 48 extend, for example, substantially parallel to the tire circumferential direction. In the present embodiment, each first middle circumferential sipe 48 connects the first middle lateral groove 46 and the second middle lateral groove 47. The first middle circumferential sipe 48 is located, for example, at the substantial center in the tire axial direction of the first middle land portion 16. In the present specification, the "substantial center" means not only a center 16c in the tire axial direction of the first middle land portion 16 but also a region within 1% of the tread width TW (shown in FIG. 2) on each of both sides in the tire axial direction from the center 16c of the first middle land portion 16. In the present embodiment, each first middle circumferential sipe 48 is located at the center 16c of the first middle land portion 16.

The first middle lateral sipes 49 extend straight, for example. The first middle lateral sipes 49 of the present embodiment are inclined with respect to the tire axial direction. In the present embodiment, the first middle lateral sipes 49 are inclined in the same direction as the first middle lateral grooves 46. The first middle lateral sipes 49 extend, for example, substantially parallel to the first middle lateral grooves 46. In the present embodiment, the first middle lateral sipes 49 include first lateral sipes 49A connected to the first shoulder circumferential groove 20 and second lateral sipes 49B connected to the first crown circumferential groove 22.

Each first lateral sipe 49A of the present embodiment has an end portion e2 terminating in the first middle land portion 16. The first lateral sipes 49A include, for example, first main lateral sipes 50a connected to the main portion 24 of the first shoulder circumferential groove 20 and first sub-lateral sipes 50b connected to the second projection portions 25B of the first shoulder circumferential groove 20. Each first sub-lateral sipe 50b of the present embodiment is formed with a smaller length in the tire axial direction than the first main lateral sipe 50a. The second lateral sipes 49B include, for example, first end sipes 51a each having an end portion e3 terminating in the first middle land portion 16, and second connection sipes 51b connecting the second middle lateral grooves 47. Each first end sipe 51a and each second connection sipe 51b have substantially the same length in the tire axial direction in the present embodiment. In the present specification, the "substantially the same length in the tire axial direction" includes not only a mode in which a length A in the tire axial direction of one sipe and a length B in the tire axial direction of the other sipe are exactly the same, but also a mode in which the absolute value of the difference between the length A of the one sipe and the length B of the other sipe is 2 mm or less. Each first end sipe 51a is located, for example, on a virtual extension line v5 obtained by extending the first lateral sipe 49A inward in the tire axial direction. The "located on the virtual extension line v5" is defined in the same manner as the "located on the virtual extension line v1".

The second middle land portion 17 of the present embodiment includes third middle lateral grooves 54, second middle circumferential sipes 55, and second middle lateral sipes 56.

The third middle lateral grooves 54 of the present embodiment extend outward in the tire axial direction from the second crown circumferential groove 23 and terminate in the second middle land portion 17. The third middle lateral grooves 54 extend straight, for example. The third middle lateral grooves 54 are inclined with respect to the tire axial direction. In the present embodiment, the third middle lateral grooves 54 are inclined in the same direction as the first middle lateral grooves 46. The third middle lateral grooves 54 extend, for example, substantially parallel to the first middle lateral grooves 46.

The second middle circumferential sipes 55 of the present embodiment extend straight. The second middle circumferential sipes 55 extend, for example, substantially parallel to the tire circumferential direction. In the present embodiment, each second middle circumferential sipe 55 connects the third middle lateral grooves 54, 54 adjacent in the tire circumferential direction. Each second middle circumferential sipe 55 is located, for example, at the substantial center in the tire axial direction of the second middle land portion 17. The "substantial center" is defined in the same manner as the "substantial center" of the first middle land portion 16. Each second middle circumferential sipe 55 of the present embodiment is located at a center 17c in the tire axial direction of the second middle land portion 17.

The second middle lateral sipes 56 extend straight, for example. In the present embodiment, the second middle lateral sipes 56 are inclined with respect to the tire axial direction. The second middle lateral sipes 56 of the present embodiment are inclined in the same direction as the third middle lateral grooves 54. The second middle lateral sipes 56 extend, for example, substantially parallel to the third middle lateral grooves 54. In the present embodiment, the second middle lateral sipes 56 include third lateral sipes 56A connected to the second shoulder circumferential groove 21 and fourth lateral sipes 56B connected to the second crown circumferential groove 23.

The third lateral sipes 56A of the present embodiment include second end sipes 57a each having an end portion e4 terminating in the second middle land portion 17, and third connection sipes 57b connecting the third middle lateral grooves 54. Each third connection sipe 57b is formed, for example, with a length in the tire axial direction smaller than that of the second end sipe 57a. Each fourth lateral sipe 56B of the present embodiment has an end portion e5 terminating in the second middle land portion 17. Each fourth lateral sipe 56B is located, for example, on a virtual extension line v6 obtained by extending the second end sipe 57a inward in the tire axial direction. The "located on the virtual extension line v6" is defined in the same manner as the "located on the virtual extension line v1". In the present embodiment, a width center line 56c of the fourth lateral sipe 56B overlaps the virtual extension line v6 over the entire length thereof.

FIG. 7 is a plan view of the crown land portion 18. As shown in FIG. 7, the crown land portion 18 of the present embodiment includes crown lateral grooves 60, a crown circumferential sipe 61, and crown lateral sipes 62.

The crown lateral grooves 60 extend straight, for example. In the present embodiment, the crown lateral grooves 60 are inclined with respect to the tire axial direction. The crown lateral grooves 60 of the present embodiment are inclined in a direction opposite to that of the first middle lateral grooves 46 (shown in FIG. 6). Each crown lateral groove 60 includes, for example, an end portion e6 terminating in the crown land portion 18. In the present embodiment, the crown lateral grooves 60 include first crown lateral grooves 60A extending from the third projection portions 25C of the first crown circumferential groove 22 and second crown lateral grooves 60B extending from the fourth projection portions 25D of the second crown circumferential groove 23. Each of the first crown lateral grooves 60A and the second crown lateral grooves 60B extends from the end side in the tire circumferential direction of the projection portion 25 in the present embodiment, more specifically, from the position of the intersection of the equal-length portion H and the inclined portion K.

The crown circumferential sipe 61 of the present embodiment extends straight. The crown circumferential sipe 61 extends, for example, parallel to the tire circumferential direction. In the present embodiment, the crown circumferential sipe 61 extends continuously in the tire circumferential direction. The crown circumferential sipe 61 is located, for example, at the substantial center in the tire axial direction of the crown land portion 18. The "substantial center" is defined in the same manner as the "substantial center" of the first middle land portion 16. The crown circumferential sipe 61 of the present embodiment is located at a center 18c in the tire axial direction of the crown land portion 18.

The crown lateral sipes 62 extend straight, for example. The crown lateral sipes 62 of the present embodiment are inclined with respect to the tire axial direction. In the present embodiment, the crown lateral sipes 62 are inclined in the same direction as the crown lateral grooves 60. The crown lateral sipes 62 extend, for example, substantially parallel to the crown lateral grooves 60. Each crown lateral sipe 62 of the present embodiment includes an end portion e7 terminating in the crown land portion 18. The crown lateral sipes 62 include, for example, first crown lateral sipes 62A connected to the main portions 24 of the first crown circumferential groove 22 and second crown lateral sipes 62B connected to the main portions 24 of the second crown circumferential groove 23.

In the present embodiment, each second crown lateral groove 60B is located on a virtual extension line v8 obtained by extending the first crown lateral sipe 62A in the tire axial direction. Also, in the present embodiment, each first crown lateral groove 60A is located on a virtual extension line v9 obtained by extending the second crown lateral sipe 62B in the tire axial direction. The "located on the virtual extension line v8" and the "located on the virtual extension line v9" are defined in the same manner as the "located on the virtual extension line v1". In the present embodiment, the second crown lateral groove 60B overlaps the virtual extension line v8 over the entire length thereof. Also, the first crown lateral groove 60A overlaps the virtual extension line v9 over the entire length thereof.

Although the particularly preferred embodiment of the present invention has been described in detail above, the present invention is not limited to the above-described embodiment, and various modifications can be made to implement the present invention within the scope of the protection as defined in the claims.

## Claims

1. A tire (1) comprising a tread portion (2), wherein
the tread portion (2) includes a first tread end (T1) and a first shoulder land portion (5) including the first tread end (T1),
a plurality of sipe groups (6) each including four sipes extending in a tire axial direction are arranged in a tire circumferential direction on the first shoulder land portion (5),
in each of the sipe groups (6), the four sipes include
a first sipe (7),
a second sipe (9) adjacent to an outer side in the tire axial direction of the first sipe (7) via a first land portion (8) where no groove and no sipe are provided between the first sipe (7) and the second sipe (9),
a third sipe (10) adjacent to the first sipe (7) in the tire circumferential direction, and
a fourth sipe (12) adjacent to the outer side in the tire axial direction of the third sipe (10) via a second land portion (11) where no groove and no sipe are provided between the third sipe (10) and the fourth sipe (12), and
a center (11c) in the tire axial direction of the second land portion (11) is located at a position different in the tire axial direction from a center (8c) in the tire axial direction of the first land portion (8),
**characterized in that**
a length (La) in the tire axial direction of the first land portion (8) is 20% to 40% of a sum Σn1 of the length (La) in the tire axial direction of the first land portion (8), a length (L1) in the tire axial direction of the first sipe (7), and a length (L2) in the tire axial direction of the second sipe (9).

2. The tire (1) according to claim 1, wherein the second sipe (9) is located on a virtual extension line (v1) obtained by extending the first sipe (7) outward in the tire axial direction.

3. The tire (1) according to claim 1 or 2, wherein the fourth sipe (12) is located on a virtual extension line (v2) obtained by extending the third sipe (10) outward in the tire axial direction.

4. The tire (1) according to any one of claims 1 to 3, wherein the second land portion (11) is located at a position different in the tire axial direction from the first land portion (8).

5. The tire (1) according to anyone of claims 1 to 4 , wherein the sum Σn1 is 50% to 90% of a length (Ls) in the tire axial direction of the first shoulder land portion (5).

6. The tire (1) according to any one of claims 1 to 5, wherein an outer end (9e) in the tire axial direction of the second sipe (9) and an outer end (12e) in the tire axial direction of the fourth sipe (12) are located inward of the first tread end (T1) in the tire axial direction.

7. The tire (1) according to any one of claims 1 to 6, wherein an angle θ1 of each of the four sipes with respect to the tire axial direction is not greater than 10 degrees.

8. The tire (1) according to claim 7, wherein
the first shoulder land portion (5) includes a plurality of first shoulder lateral grooves (30) located so as to interpose the sipe groups (6) therebetween, and
an angle θ2 of each of the plurality of first shoulder lateral grooves (30) with respect to the tire axial direction is not greater than 10 degrees.

9. The tire (1) according to claim 8, wherein an absolute value |θ1 - θ2| of a difference between the angle θ1 of each of the four sipes and the angle θ2 of each of the plurality of first shoulder lateral grooves (30) is not greater than 10 degrees.

10. The tire (1) according to any one of claims 1 to 9, wherein
the tread portion (2) includes a first shoulder circumferential groove (20) demarcating the first shoulder land portion (5), and
an inner end (7i) in the tire axial direction of the first sipe (7) and an inner end (10i) in the tire axial direction of the third sipe (10) are connected to the first shoulder circumferential groove (20).

11. The tire (1) according to claim 10, wherein the first shoulder land portion (5) includes a second shoulder lateral groove (31) extending inward in the tire axial direction from the first tread end (T1) and having an inner end (31i) located in the first shoulder land portion (5), and a connection sipe (32) connecting the inner end (31i) of the second shoulder lateral groove (31) and the first shoulder circumferential groove (20).

12. The tire (1) according to any one of claims 1 to 11, wherein the length (Ls) in the tire axial direction of the first shoulder land portion (5) is 4.5% to 40% of a tread width (TW).

13. The tire (1) according to any one of claims 1 to 12, wherein
the tread portion (2) includes an inner tread end located on an inner side of a vehicle when the tire (1) is mounted to the vehicle, and
the first tread end (T1) is the inner tread end.

## Patentansprüche

1. Reifen (1), der einen Laufflächenabschnitt (2) umfasst, wobei
der Laufflächenabschnitt (2) ein erstes Laufflächenende (T1) und einen ersten Schulterlandabschnitt (5) umfasst, der das erste Laufflächenende (T1) umfasst,
eine Vielzahl von Feinschnittgruppen (6), die jeweils vier Feinschnitte umfassen, die sich in einer Reifenaxialrichtung erstrecken, in einer Reifenumfangsrichtung auf dem ersten Schulterlandabschnitt (5) angeordnet sind,
in jeder der Feinschnittgruppen (6) die vier Feinschnitte umfassen
einen ersten Feinschnitt (7),
einen zweiten Feinschnitt (9), der an eine Außenseite in der Reifenaxialrichtung des ersten Feinschnitts (7) über einen ersten Landabschnitt (8) angrenzt, wobei keine Rille und kein Feinschnitt zwischen dem ersten Feinschnitt (7) und dem zweiten Feinschnitt (9) vorgesehen sind,
einen dritten Feinschnitt (10), der an den ersten Feinschnitt (7) in der Reifenumfangsrichtung angrenzt, und
einen vierten Feinschnitt (12), der an die Außenseite in der Reifenaxialrichtung des dritten Feinschnitts (10) über einen zweiten Landabschnitt (11) angrenzt, wobei keine Rille und kein Feinschnitt zwischen dem dritten Feinschnitt (10) und dem vierten Feinschnitt (12) vorgesehen sind, und
eine Mitte (11c) in der Reifenaxialrichtung des zweiten Landabschnitts (11) an einer Position angeordnet ist, die sich in der Reifenaxialrichtung von einer Mitte (8c) in der Reifenaxialrichtung des ersten Landabschnitts (8) unterscheidet,
**dadurch gekennzeichnet, dass**
eine Länge (La) in der Reifenaxialrichtung des ersten Landabschnitts (8) 20 % bis 40 % einer Summe Σn1 der Länge (La) in der Reifenaxialrichtung des ersten Landabschnitts (8), einer Länge (L1) in der Reifenaxialrichtung des ersten Feinschnitts (7) und einer Länge (L2) in der Reifenaxialrichtung des zweiten Feinschnitts (9) beträgt.

2. Reifen (1) nach Anspruch 1, wobei der zweite Feinschnitt (9) auf einer virtuellen Verlängerungslinie (v1) angeordnet ist, die durch Verlängern des ersten Feinschnitts (7) nach außen in der Reifenaxialrichtung erhalten wird.

3. Reifen (1) nach Anspruch 1 oder 2, wobei der vierte Feinschnitt (12) auf einer virtuellen Verlängerungslinie (v2) angeordnet ist, die durch Verlängern des dritten Feinschnitts (10) nach außen in der Reifenaxialrichtung erhalten wird.

4. Reifen (1) nach einem der Ansprüche 1 bis 3, wobei der zweite Landabschnitt (11) an einer Position angeordnet ist, die sich in der Reifenaxialrichtung von dem ersten Landabschnitt (8) unterscheidet.

5. Reifen (1) nach einem der Ansprüche 1 bis 4, wobei die Summe Σn1 50 % bis 90 % einer Länge (Ls) in der Reifenaxialrichtung des ersten Schulterlandabschnitts (5) beträgt.

6. Reifen (1) nach einem der Ansprüche 1 bis 5, wobei ein äußeres Ende (9e) in der Reifenaxialrichtung des zweiten Feinschnitts (9) und ein äußeres Ende (12e) in der Reifenaxialrichtung des vierten Feinschnitts (12) innen von dem ersten Laufflächenende (T1) in der Reifenaxialrichtung angeordnet sind.

7. Reifen (1) nach einem der Ansprüche 1 bis 6, wobei ein Winkel θ1 jedes der vier Feinschnitte in Bezug auf die Reifenaxialrichtung nicht größer als 10 Grad ist.

8. Reifen (1) nach Anspruch 7, wobei
der erste Schulterlandabschnitt (5) eine Vielzahl von ersten Schulterquerrillen (30) umfasst, die so angeordnet sind, dass sich die Feinschnittgruppen (6) dazwischen einfügen, und
ein Winkel θ2 jeder der Vielzahl von ersten Schulterquerrillen (30) in Bezug auf die Reifenaxialrichtung nicht größer als 10 Grad ist.

9. Reifen (1) nach Anspruch 8, wobei ein Absolutwert |θ1 - θ2| einer Differenz zwischen dem Winkel θ1 jedes der vier Feinschnitte und dem Winkel θ2 jeder der Vielzahl von ersten Schulterquerrillen (30) nicht größer als 10 Grad ist.

10. Reifen (1) nach einem der Ansprüche 1 bis 9, wobei
der Laufflächenabschnitt (2) eine erste Schulterumfangsrille (20) umfasst, die den ersten Schulterlandabschnitt (5) abgrenzt, und
ein inneres Ende (7i) in der Reifenaxialrichtung des ersten Feinschnitts (7) und ein inneres Ende (10i) in der Reifenaxialrichtung des dritten Feinschnitts (10) mit der ersten Schulterumfangsrille (20) verbunden sind.

11. Reifen (1) nach Anspruch 10, wobei der erste Schulterlandabschnitt (5) eine zweite Schulterquerrille (31), die sich einwärts in der Reifenaxialrichtung von dem ersten Laufflächenende (T1) erstreckt und ein inneres Ende (31i) aufweist, das in dem ersten Schulterlandabschnitt (5) angeordnet ist, und einen Verbindungsfeinschnitt (32) umfasst, der das innere Ende (31i) der zweiten Schulterquerrille (31) und die erste Schulterumfangsrille (20) verbindet.

12. Reifen (1) nach einem der Ansprüche 1 bis 11, wobei die Länge (Ls) in der Reifenaxialrichtung des ersten Schulterlandabschnitts (5) 4,5 % bis 40 % einer Laufflächenbreite (TW) beträgt.

13. Reifen (1) nach einem der Ansprüche 1 bis 12, wobei
der Laufflächenabschnitt (2) ein inneres Laufflächenende umfasst, das an einer Innenseite eines Fahrzeugs angeordnet ist, wenn der Reifen (1) an dem Fahrzeug aufgezogen ist, und
das erste Laufflächenende (T1) das innere Laufflächenende ist.

## Revendications

1. Pneumatique (1) comprenant une partie de bande de roulement (2), dans lequel
la partie de bande de roulement (2) comprend une première extrémité de bande de roulement (T1) et une première portion en relief d'épaulement (5) comprenant la première extrémité de bande de roulement (T1),
une pluralité de groupes de fentes (6) comprenant chacun quatre fentes s'étendant dans une direction axiale du pneumatique sont agencés dans une direction circonférentielle du pneumatique sur la première portion en relief d'épaulement (5),
dans chacun des groupes de fentes (6), les quatre fentes comprennent
une première fente (7),
une deuxième fente (9) adjacente à un côté extérieur dans la direction axiale du pneumatique de la première fente (7) par l'intermédiaire d'une première portion en relief (8) où aucune rainure ni aucune fente ne sont prévues entre la première fente (7) et la deuxième fente (9),
une troisième fente (10) adjacente à la première fente (7) dans la direction circonférentielle du pneumatique, et
une quatrième fente (12) adjacente au côté extérieur dans la direction axiale du pneumatique de la troisième fente (10) par l'intermédiaire d'une deuxième portion en relief (11) où aucune rainure ni aucune fente ne sont prévues entre la troisième fente (10) et la quatrième fente (12), et
un centre (11c) dans la direction axiale du pneumatique de la deuxième portion en relief (11) est situé à une position différente dans la direction axiale du pneumatique d'un centre (8c) dans la direction axiale du pneumatique de la première portion en relief (8),
**caractérisé en ce que**
une longueur (La) dans la direction axiale du pneumatique de la première portion en relief (8) est de 20 % à 40 % d'une somme Σn1 de la longueur (La) dans la direction axiale du pneumatique de la première portion en relief (8), d'une longueur (L1) dans la direction axiale du pneumatique de la première fente (7) et d'une longueur (L2) dans la direction axiale du pneumatique de la deuxième fente (9).

2. Pneumatique (1) selon la revendication 1, dans lequel la deuxième fente (9) est située sur une ligne d'extension virtuelle (v1) obtenue en prolongeant la première fente (7) vers l'extérieur dans la direction axiale du pneumatique.

3. Pneumatique (1) selon la revendication 1 ou 2, dans lequel la quatrième fente (12) est située sur une ligne d'extension virtuelle (v2) obtenue en prolongeant la troisième fente (10) vers l'extérieur dans la direction axiale du pneumatique.

4. Pneumatique (1) selon l'une quelconque des revendications 1 à 3, dans lequel la deuxième portion en relief (11) est situé à une position différente dans la direction axiale du pneumatique de la première portion en relief (8).

5. Pneumatique (1) selon l'une quelconque des revendications 1 à 4, dans lequel la somme Σn1 est de 50 % à 90 % d'une longueur (Ls) dans la direction axiale du pneumatique de la première portion en relief d'épaulement (5).

6. Pneumatique (1) selon l'une quelconque des revendications 1 à 5, dans lequel une extrémité extérieure (9e) dans la direction axiale du pneumatique de la deuxième fente (9) et une extrémité extérieure (12e) dans la direction axiale du pneumatique de la quatrième fente (12) sont situées vers l'intérieur de la première extrémité de bande de roulement (T1) dans la direction axiale du pneumatique.

7. Pneumatique (1) selon l'une quelconque des revendications 1 à 6, dans lequel un angle θ1 de chacune des quatre fentes par rapport à la direction axiale du pneumatique n'est pas supérieur à 10 degrés.

8. Pneumatique (1) selon la revendication 7, dans lequel
la première portion en relief d'épaulement (5) comprend une pluralité de premières rainures transversales d'épaulement (30) agencées de manière à interposer les groupes de fentes (6) entre elles, et
un angle θ2 de chacune de la pluralité de premières rainures transversales d'épaulement (30) par rapport à la direction axiale du pneumatique n'est pas supérieur à 10 degrés.

9. Pneumatique (1) selon la revendication 8, dans lequel une valeur absolue |θ1 - θ2| d'une différence entre l'angle θ1 de chacune des quatre fentes et l'angle θ2 de chacune de la pluralité de premières rainures transversales d'épaulement (30) n'est pas supérieure à 10 degrés.

10. Pneumatique (1) selon l'une quelconque des revendications 1 à 9, dans lequel
la partie de bande de roulement (2) comprend une première rainure circonférentielle d'épaulement (20) délimitant la première portion en relief d'épaulement (5), et
une extrémité intérieure (7i) dans la direction axiale du pneumatique de la première fente (7) et une extrémité intérieure (10i) dans la direction axiale du pneumatique de la troisième fente (10) sont reliées à la première rainure circonférentielle d'épaulement (20).

11. Pneumatique (1) selon la revendication 10, dans lequel la première portion en relief d'épaulement (5) comprend une deuxième rainure transversale d'épaulement (31) s'étendant vers l'intérieur dans la direction axiale du pneumatique depuis la première extrémité de bande de roulement (T1) et ayant une extrémité intérieure (31i) située dans la première portion en relief d'épaulement (5), et une fente de liaison (32) reliant l'extrémité intérieure (31i) de la deuxième rainure transversale d'épaulement (31) et la première rainure circonférentielle d'épaulement (20).

12. Pneumatique (1) selon l'une quelconque des revendications 1 à 11, dans lequel la longueur (Ls) dans la direction axiale du pneumatique de la première portion en relief d'épaulement (5) est de 4,5 % à 40 % d'une largeur de bande de roulement (TW).

13. Pneumatique (1) selon l'une quelconque des revendications 1 à 12, dans lequel
la partie de bande de roulement (2) comprend une extrémité intérieure de bande de roulement située sur un côté intérieur d'un véhicule lorsque le pneumatique (1) est monté sur le véhicule, et
la première extrémité de bande de roulement (T1) est l'extrémité intérieure de bande de roulement.
